# EUROPÄISCHE PATENTSCHRIFT

(11) **EP 1 476 927 B1**
(45) Veröffentlichungstag und Bekanntmachung des Hinweises auf die Patenterteilung: **23.11.2005**
(21) Anmeldenummer: 03714662.8
(22) Anmeldetag: 20.02.2003
(51) Int. Cl.: H02B 11/133

(54) **VORRICHTUNG ZUR STEUERUNG EINES SPERRMECHANISMUS EINES ELEKTRISCHEN SCHALTERS UND SCHALTZELLE MIT EINER DERARTIGEN VORRICHTUNG**
DEVICE FOR CONTROLLING A BLOCKING MECHANISM IN AN ELECTRIC SWITCH AND SWITCH CELL COMPRISING SAID DEVICE
DISPOSITIF DE COMMANDE D'UN MECANISME DE BLOCAGE D'UN INTERRUPTEUR ELECTRIQUE ET CELLULE DE COUPURE DOTEE D'UN TEL DISPOSITIF

(30) Priorität: 21.02.2002 DE 20202927 U
(43) Veröffentlichungstag der Anmeldung: 17.11.2004
(73) Patentinhaber: SIEMENS AKTIENGESELLSCHAFT, 80333 München (DE)
(72) Erfinder: DEYLITZ, Erhard, 13125 Berlin (DE); LOSCH, Stefan, 13595 Berlin (DE)
(86) Internationale Anmeldenummer: PCT/DE2003/000620
(87) Internationale Veröffentlichungsnummer: WO 2003/073573

(56) Entgegenhaltungen:
- US-A- 5 912 444

## Beschreibung

Die Erfindung liegt auf dem Gebiet der elektrischen Schalter, die in einer mit einer Tür versehenen Schaltzelle verfahrbar angeordnet sind, und ist bei der konstruktiven Gestaltung einer Vorrichtung zur Steuerung eines Sperrmechanismus des Schalters in Abhängigkeit von der Stellung der Tür der Schaltzelle anzuwenden, die ein Schubelement und eine Schrägfläche aufweist, wobei sich die Schrägfläche in Einbaulage der Vorrichtung in Richtung des Fahrweges des Schalters erstreckt und das Schubelement in Abhängigkeit von der Stellung der Tür der Schaltzelle in der Schaltzelle verschiebbar gehalten ist, und wobei das Schubelement in Wirkverbindung mit der Schrägfläche derart auf den Sperrmechanismus wirkt dass sich der Sperrmechanismus bei geschlossener Tür in einer Freigabe-Stellung und bei geöffneter Tür in einer Sperr-Stellung befindet.

Eine derartige Vorrichtung für einen als Niederspannungs-Leistungsschalter ausgebildeten elektrischen Schalter ist aus der DE-Patentschrift 195 03 624 C1 bekannt. - Bei dieser bekannten Vorrichtung ist ein Ende eines als Schubstange ausgebildeten Schubelementes über ein an der Tür der Schaltzelle befestigtes Druckstück unter Federkraft an der Tür abgestützt. Hierbei ist die Schubstange in einem Führungsrohr angeordnet, das mit einem geschlitzten Frontteil versehen ist. In dieses geschlitzte Frontteil greift das Druckstück ein. Das andere Ende der Schubstange liegt bei geschlossener Tür auf dem unteren Ende der in Richtung des Fahrweges des Schalters geneigten Schrägfläche derart auf, dass er eine relativ abgesenkte Stellung bezüglich eines Tastwinkels des Sperrmechanismus einnimmt und sich der Sperrmechanismus damit in einer Freigabe-Stellung befindet. In dieser Freigabe-Stellung ist der Fahrantrieb des Schalters zum Betätigen freigegeben. Beim Öffnen der Tür verlässt das Druckstück den geschlitzten Frontteil des Führungsrohres. Die Schubstange folgt dieser Bewegung unter dem Einfluss der Federkraft bis das andere Ende der Schubstange am oberen Ende der Schrägfläche anlangt und damit eine relativ angehobene Stellung erreicht. Dabei wird der Tastwinkel geschwenkt und dabei der Sperrmechanismus in seine Sperrstellung überführt. In dieser Sperr-Stellung ist der Fahrantrieb des Schalters gegen ein Betätigen gesperrt.

Der Erfindung liegt hiervon ausgehend die Aufgabe zugrunde, die Vorrichtung zur Steuerung des Sperrmechanismus konstruktiv einfacher zu gestalten.

Gemäß der Erfindung wird diese Aufgabe dadurch gelöst, dass die Schrägfläche quer zur Richtung des Fahrweges des Schalters geneigt ist und dass sich die Bewegungsbahn des Schubelementes schräg zur Richtung des Fahrweges erstreckt.

Bei einer derartigen Ausgestaltung der neuen Vorrichtung - bei der eine Komponente der Bewegungsbahn des Schubelementes quer d. h. rechtwinklig zur Richtung des Fahrweges des Schalters verläuft - kann das Betätigungselement ohne zusätzliche, die Bewegung des Schubelementes auf den Sperrmechanismus übertragende Elemente direkt vom Schubelement mittels einer Keilwirkung an der Schrägfläche beaufschlagt werden.

Eine bevorzugte Ausgestaltungsform der neuen Vorrichtung sieht vor, dass die Schrägfläche an dem Schubelement ausgebildet ist. - Eine derartig ausgebildete Vorrichtung ist auf Schalter mit unterschiedlich angeordneten Sperrmechanismen anwendbar, leicht - beispielsweise in Form eines Metall-Blechteiles - herstellbar und ohne wesentliche Änderungen der Schaltzelle bzw. des in der Schaltzelle angeordneten Einschubrahmens nachrüstbar. Insbesondere müssen keine zusätzlichen Schrägflächen in der Schaltzelle bzw. in dem Einschubrahmen des Schalters vorgesehen werden.

Die neue Vorrichtung ist bevorzugt in Schaltzellen vorgesehen, in denen ein elektrischer Schalter fahrbar angeordnet ist, der den zu steuernden Sperrmechanismus zum Sperren eines Fahrantriebes des Schalters aufweist.
Eine gemäß der Erfindung ausgebildete Vorrichtung und eine mit einer derartigen Vorrichtung versehene Schaltzelle ist in den Figuren 1 bis 6 dargestellt. Dabei zeigen
Figur 1 eine Frontansicht einer Schaltstelle mit einem Einschubrahmen, in dem ein Niederspannungs-Leistungsschalter angeordnet ist, der eine Ausnehmung für eine Handkurbel eines Fahrantriebes aufweist,
Figur 2 den Fahrantrieb des Niederspannungs-Leistungsschalters gemäß Figur 1 als Baugruppe,
Figur 3 den Fahrantrieb gemäß Figur 2, jedoch ohne ein Gehäuse und ohne die Ausnehmung für die Handkurbel, wobei sich eine Fahrwelle des Fahrantriebes in der Trennstellung des zugehörigen Leistungsschalters befindet,
Figur 4 eine der Figur 3 entsprechende Darstellung wesentlicher Teile des Fahrantriebes, jedoch in der Betriebsstellung des zugehörigen Leistungsschalters und
Figuren 5 und 6 zwei weitere Darstellungen des Fahrantriebes mit einem Sperrmechanismus und mit einer Vorrichtung zur Steuerung des Sperrmechanismus.

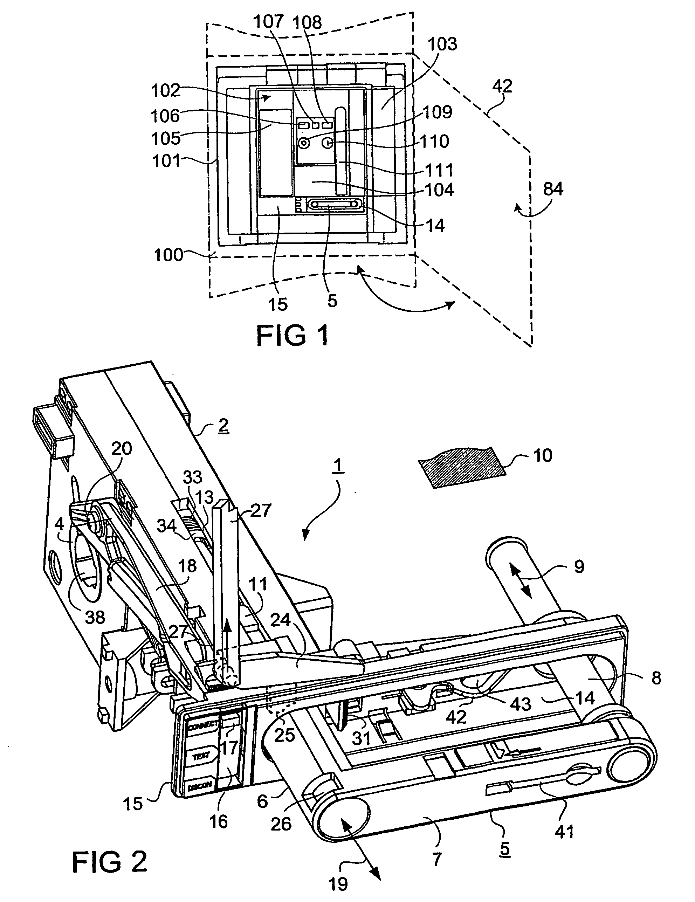

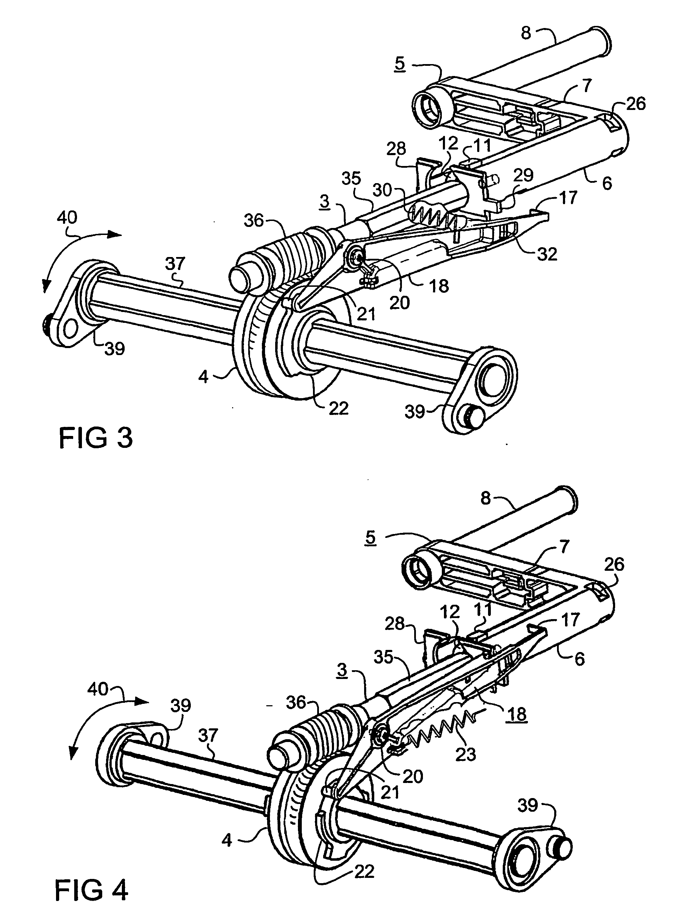

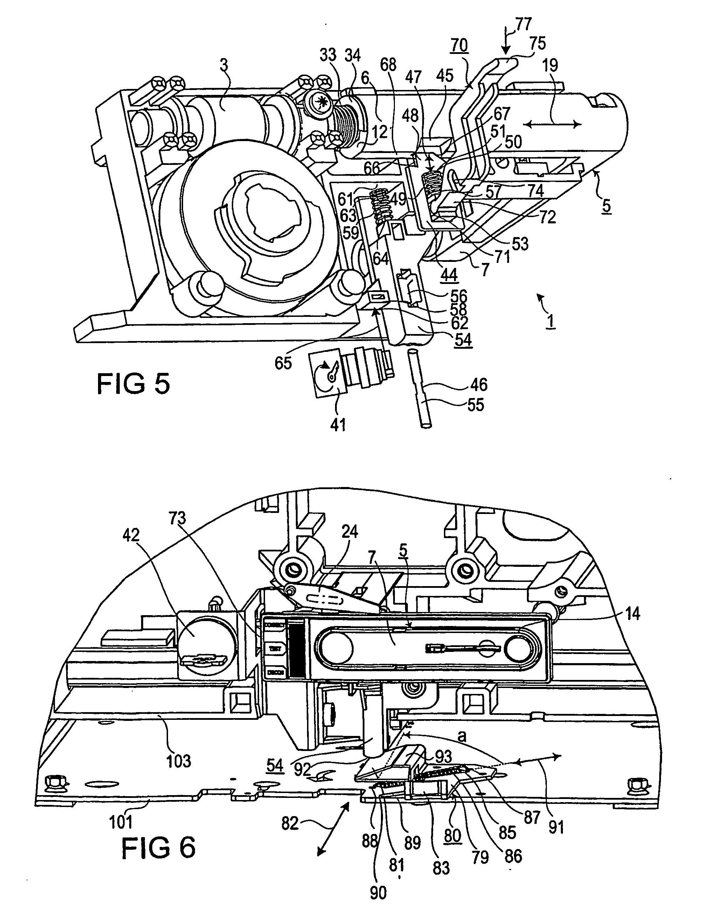

Gemäß der Figur 1 ist in einer Schaltzelle 100 eines Schaltschrankes oder einer Schaltanlage ein Einschubrahmen 101 angeordnet, wobei ein Niederspannungs-Leistungsschalter 102 in dem Einschubrahmen 101 in bekannter Weise verfahrbar angeordnet ist. Der in dem Einschubrahmen 101 (vgl. auch Figur 6) eingefahrene Niederspannungs-Leistungsschalter 102 weist ein Gehäuse 103 (vgl. auch Figur 6) zur Aufnahme einer Schaltpolbaugruppe und ein an der Vorderseite des Gehäuses 103 befestigtes die Frontseite des Schalters bildendes Bedienpult 104 auf, mittels dessen ein Schalt-Antrieb und weitere Teile des Schalters abgedeckt werden. Am Bedienpult 104 sind ein Überstromauslöser 105, Bedien- und Anzeigeelemente 106 bis 110, ein Handaufzugshebel 111 zum Spannen eines Federspeicher des Schalt-Antriebes sowie eine in eine Ausnehmung 14 versenkbare Handkurbel 5 zum Betätigen einer Antriebswelle 3 (vgl. Figur 3 und 4) eines Fahrantriebes 1 (vgl. Figuren 2 bis 5) angeordnet.

Gemäß der Figur 2 weist der Fahrantrieb 1 ein Gehäuse 2 auf, das zweckmäßig aus zwei schalenartigen Hälften zusammengesetzt sein kann, zwischen denen Getriebeteile und weitere Komponenten angeordnet sind. Eine mittels der Handkurbel 5 ausgeübte Drehbewegung wird mittels der Antriebswelle 3 (vgl. die Figuren 3 bis 4) in eine Drehung einer Fahrwelle 37 (Figuren 3 und 4) umgesetzt. Hierzu ist auf der Antriebswelle 3 eine Schnecke 36 (vgl. Figuren 3 und 4) angeordnet, die mit einem Getrieberad 4 in Eingriff steht. Die Längsachsen der Antriebswelle 3 und der Fahrwelle 37 stehen rechtwinklig zueinander. Die Fahrwelle 37 ist nicht fest mit dem Fahrantrieb 1 verbunden, sondern ist in einer Profilöffnung 38 des Getrieberades 4 verschiebbar, die dem Profil der Fahrwelle 37 angepasst ist. Auf diese Weise ist der Fahrantrieb 1 für Leistungsschalter unterschiedlicher Größe verwendbar und ist nicht an eine bestimmte Position entlang der Fahrwelle 37 gebunden. An den Enden der Fahrwelle 37 sind in bekannter Weise Fahrkurbeln 39 (vgl. Figuren 3 und 4) angebracht, die etwa in der Weise mit ortsfesten Teilen zusammenwirken, wie dies beispielsweise schematisch in der DE 44 20 580 C1 oder der DE 44 20 581 C1 (jeweils Figur 1) gezeigt ist. Gleichfalls nicht dargestellt ist die Befestigung des Fahrantriebes 1 an einem Leistungsschalter, da dies dem Fachmann vertraut ist.

Zum Drehen der in dem Gehäuse 2 gelagerten Antriebswelle 3 dient, wie schon erwähnt, eine Handkurbel 5, die im Unterschied zu anderen bekannten Fahrantrieben (vgl. die genannten DE 44 20 580 C1 und DE 44 20 581 C1) von der Antriebswelle 3 nicht abnehmbar ist, sondern Bestandteil des Fahrantriebes 1 ist. Die Handkurbel 5 weist einen hohlen Schaft 6 auf, der einen Sechskantschaft 35 der Antriebswelle 3 (Figuren 3 und 4) umgreift und entlang der Richtung eines Feiles 19 auf der Antriebswelle 1 verschiebbar ist. Offensichtlich können die Antriebswelle 3 und der Schaft 6 auch andere Profile aufweisen, um eine drehschlüssige Kopplung herzustellen, die eine Längsverschiebung ermöglicht.

Der Schaft 6 trägt einen Führungszapfen 11, der in eine am Gehäuse 2 vorgesehene Führungsnut 13 eingreift. Da die Führungsnut 13 dem Führungszapfen 11 angepasst ist, kann der Schaft 6 entlang der Führungsnut 13 verschoben werden, jedoch ohne Möglichkeit der Drehung. Diese wird erst dann freigegeben, wenn der Schaft 6 ganz nach vorn herausgezogen ist, wo in dem Gehäuse 2 die Führungsnut 13 in eine Ringnut mündet.

Unter "Ringnut" sind in diesem Zusammenhang auch anders geformte Ausnehmungen des Gehäuses 2 zu verstehen, die eine freie Drehung des Schaftes 6 ermöglichen.

Die Handkurbel 5 umfasst neben dem Schaft 6 einen mit dem Schaft 6 verbundenen (oder einstückig mit diesem hergestellten) Kurbelarm 7, an dessen Ende sich eine Öffnung zur Aufnahme eines Griffstückes 8 befindet. Das Griffstück 8 ist in der genannten Öffnung in der Richtung eines Feiles 9 parallel zu dem Schaft 6 verschiebbar und kann aus der eingeschobenen Ruhestellung gemäß der Figur 2 vom Benutzer in eine herausgezogene Arbeitsstellung überführt werden, die in den die Figuren 3 und 4 gezeigt ist.

In der Normal- oder Ruhestellung (vgl. Figuren 1 und 6) ist die Handkurbel 5 in einer als Aufnahmetasche 14 ausgebildeten Ausnehmung bündig versenkt unterzubringen. Die Aufnahmetasche 14 gehört zu einem Bedienpulteinsatz 15 (vgl. Figuren 1 und 2), der am unteren Rand des Bedienpultes 104 des Leistungsschalters 102 angeordnet ist. Beim Einschieben der Handkurbel 5 in ihre Ruhestellung gelangt eine Stirnfläche 12 (vgl. Figuren 3 bis 5) am Ende des Schaftes 6 zur Anlage an einem Stützring 34, der durch eine Anschlagfeder 33 (vgl. Figur 5) belastet ist. Die Anschlagfeder 33 ist eine Schraubendruckfeder, die auf der Antriebswelle 3 sitzt. Anschließend schiebt der Benutzer das Griffstück 8 durch die im Kurbelarm 7 befindliche Öffnung bis zur Bündigstellung mit dem Kurbelarm 7. Das innere Ende des Griffstückes 8 liegt dann an einem Anschlag 10 an.

In dieser eingeschobenen Ruhestellung hat der Benutzer an sich keine Möglichkeit, den Kurbelarm zu ergreifen, weil die Kontur der Aufnahmetasche 14 dem Kurbelarm 7 mit Schaft 6 und Griffstück 8 angepasst ist. Dennoch ist bei Bedarf ein rascher Zugriff gewährleistet. Dies geschieht dadurch, dass die Tiefe der Aufnahmetasche um ein gewisses Maß größer bemessen ist, als es die Unterbringung der genannten Teile erfordert. Der Benutzer kann deshalb den Kurbelarm 7 gegen die Kraft der Anschlagfeder 33 etwas in die Aufnahmetasche hineindrücken. An dieser Bewegung kann jedoch das Griffstück 8 wegen der Anlage an dem festen Anschlag 10 nicht teilnehmen und steht nun um den gleichen Betrag aus dem Kurbelarm 7 hervor. Der Benutzer kann nun das Griffstück 8 und anschließend den Kurbelarm 7 mit Schaft 6 herausziehen.

In ähnlicher Weise wie bei bekannten Fahrantrieben ist neben der Handkurbel 5 ein Anzeigefenster 16 angeordnet, in dem ein Anzeigemittel 17 für die betriebliche Position des Leistungsschalters in seinem Einschubrahmen sichtbar ist. Diese Positionen - Betriebstellung, Teststellung und Trennstellung - beziehen sich bekanntlich auf die relative Stellung von beweglichen Haupttrennkontakten und Hilfstrennkontakten und damit bei gegebener Anordnung dieser Trennkontakte auf die Position des Leistungsschalter 102 im zugehörigen Einschubrahmen 101. Aufgrund des Eingreifens der Fahrkurbeln 39 an den Enden der Fahrwelle 37 in eine ortsfeste Führung des Einschubrahmens 101 bildet somit die Winkelstellung des Getrieberades 4 ein zuverlässiges Merkmal für die genannten Stellungen.

Gemäß der Figuren 3 und 4 ist für die Zwecke der Anzeigevorrichtung an einer Stirnseite des Getrieberades 4 eine Steuerkurve 22 angeordnet, an der ein Taststift 21 eines zweiarmigen Anzeigehebels 18 unter der Wirkung einer Zugfeder 23 (Figur 4) anliegt. Der um eine Lagerschraube 20 schwenkbare Anzeigehebel 18 überträgt somit die Steuerkurve 22 in eine vom Benutzer im Anzeigefenster 16 (vgl. Figur 2) wahrnehmbare Stellung des Anzeigemittels 17. Hierbei ist es wesentlich, dass der Benutzer bei der Betätigung der Handkurbel 5 das Erreichen der genannten Stellungen gut erkennen kann. Zu diesem Zweck ist die Steuerkurve 22 mit Abschnitten unterschiedlicher Steigung versehen, die so gestaltet sind, dass das Anzeigemittel jeweils kurz nach dem Verlassen einer der genannten Stellungen eine Zwischenstellung einnimmt und dann erst kurz vor dem Erreichen der folgenden Stellung auf diese zeigt. Durch die relativ nahe bei der Steuerkurve 22 gelegene Lagerschraube 20 des Anzeigehebels 18 werden relativ kleine Auslenkungen in gut sichtbare Bewegungen des Anzeigemittels 17 im Anzeigefenster 16 übersetzt.

Durch einen Rastschieber 28, der durch eine Vorspannfeder 30 belastet ist (Figur 3), wird der Schaft 6 gegen ein unbeabsichtigtes Einschieben in das Gehäuse 2 geschützt. Der Rastschieber 28 ist im vorderen Teil des Gehäuses 2 geführt und wirkt gleichfalls mit der Stirnfläche 12 am inneren Ende des Schaftes 6 zusammen. Beim Herausziehen des Schaftes 6 in seine Arbeitsstellung springt der Rastschieber 28 mit einer seiner beiden der Antriebswelle 3 zugewandten Kanten hinter die Stirnfläche 12 und sperrt damit das Einschieben des Schaftes 6. Um den Schaft 6 zum Einschieben freizugeben, steht dem Benutzer eine Betätigungsnase 31 (vgl. Figur 2) zur Verfügung, die so angeordnet ist, dass sie in die Aufnahmetasche 14 hineinragt und daher nur bei herausgezogener Handkurbel 5 zugänglich ist.

Eine zusätzliche Funktion hat der Rastschieber 28 in der mittleren Position (Teststellung) des Fahrantriebes 1. Diese äußert sich für den Benutzer im Unterschied zu der Betriebsstellung und Trennstellung nicht durch einen fühlbaren Widerstand an der Handkurbel durch das Erreichen von Endanschlägen. Damit der Benutzer dennoch die Handkurbel 5 nur beim genauen Erreichen der Teststellung einschieben kann, ist der Rastschieber 28 mit einer Zunge 29 versehen, die seitlich am Gehäuse 2 heraustritt, wenn die Betätigungsnase 31 bedient wird und eine im Anzeigehebel 18 angeordnete Fensteröffnung der Zunge 29 gegenübersteht.

Die Fahrantriebe der bekannten Schalter besitzen bereits eine Einrichtung, die eine Betätigung verhindert, wenn der Leistungsschalter eingeschaltet ist (DE 44 20 580 C1). Hierzu wird der Zugang zu der Antriebswelle durch ein Schutzorgan versperrt. - Bei dem Fahrantrieb nach der Erfindung wird darüber hinaus dem Benutzer auch der Zugang zur Handkurbel 5 verwehrt, indem bei in der Ausnehmung 14 versenktem Kurbelarm 7 ein zum Sperren des Betätigens der Antriebwelle aktivierter erster Sperrmechanismus den Schaft 6 der Handkurbel 5 axial fixiert. Dies geschieht durch ein als Sperrhebel 24 (vgl. Figuren 2 und 6) ausgebildetes erstes Sperrelement in Verbindung mit einer im Schaft 6 der Handkurbel angeordneten in axialer Richtung des Schalters begrenzten Sperrnut 26 (Figur 2). Der Sperrhebel 24 steht dabei sinngemäß mit einem als Sperrstange 27 (Figur 2) ausgebildeten ersten Betätigungselement in Verbindung, wie dies in der DE 44 20 580 C1 beschrieben ist. Bestehen die Voraussetzungen dafür, dass der Fahrantrieb 1 gefahrlos betätigt werden kann, so wird der Sperrhebel 24 durch das Betätigungselement 27 entsprechend einem in der Figur 1 gezeigten Feil angehoben, wobei eine Sperrnase 25 des Sperrhebels 24 aus der Sperrnut 26 des Schaftes 6 herausgezogen wird. Umgekehrt ist die Einschaltung des Leistungsschalters 102 erst möglich, wenn die Handkurbel 5 wieder in ihre Ruhestellung in der Ausnehmung 14 eingeschoben ist und somit die Sperrnase 25 am Sperrhebel 24 wieder in die Sperrnut 26 eintreten kann.

Gemäß der Figur 5 weist der Fahrantrieb 1 des neuen Schalters einen zweiten Sperrmechanismus zum Sperren des Betätigens der Antriebswelle 3 auf. Dieser zweite Sperrmechanismus dient dazu, ein Verfahren des Schalters im Einschubrahmen mittels eines Zylinderschlosses 41 (Figur 5); 42 (Figur 6) und/oder bei geöffneter Tür 42 (vgl. Figur 1) der Schaltzelle 100 zu verhindern. Auch dieser zweite Sperrmechanismus fixiert den Schaft 6 der Handkurbel 5 in seiner axialen Richtung 19, wenn der Sperrmechanismus zum Sperren aktiviert ist und wenn der Kurbelarm 7 der Handkurbel in der Ausnehmung 14 versenkt ist. Dies geschieht durch ein als Sperrklinke 44 ausgebildetes zweites Sperrelement in Verbindung mit einer im Schaft 6 der Handkurbel angeordneten zweiten Sperrnut 45, die ebenfalls in axialer Richtung 19 des Schaftes 6 begrenzt ist. Die Sperrklinke 44 ist als Metall-Stanzteil ausgebildet und an Anschlagflächen am Fahrantrieb in Richtung des Feiles 47 senkrecht zum Schaft 6 verschiebbar geführt. Sie weist neben einer Sperrnase 48, die an der dem Schaft 6 zugewandten Seite angeformt ist, eine fensterartige Öffnung 49 auf, von dessen einer Innenwand eine parallel zur Verschiebungsrichtung 47 der Sperrklinke verlaufende erster Haltezapfen 50 für eine Vorspannfeder 51 angeformt ist. In die fensterartige Öffnung 59 der Sperrklinke 44 ragt ein erster Arm 53 eines in Verschiebungsrichtung 47 der Sperrklinke verschiebbar am Fahrantrieb gehaltenen zweiten Betätigungselementes 54. Zur Halterung dieses zweiten Betätigungselementes 54 an dem Fahrantrieb 1 dient ein zylindrischer Stift 55 der senkrecht zur Verschiebungsrichtung 47 verlaufende Innenwände des Betätigungselementes 54 und diesen Wänden gegenüberliegende Befestigungslaschen des Fahrantriebes im Bereich entsprechender Durchgangsbohrungen durchgreift. Zur axialen Fixierung des eingeschobenen Stiftes, weist der Stift einen verjüngten Abschnitt 46 auf, in den eine federnde Nase 56 des Befestigungselementes 54 einschnappt. Zur Demontage des Betätigungselementes 54 kann diese Nase 56 mittels eines Schraubendrehers oder eines vergleichbar schmalen Werkzeuges aus dem verjüngten Abschnitt 46 des Stiftes 55 herausgebogen und damit der Stift zum Herausziehen freigegeben werden.

An dem ersten Arm des zweiten Betätigungselementes 54 ist ein zweiter Haltezapfen 57 für die Vorspannfeder 51 angeformt. Ein zweiter Arm 58 des Betätigungselementes 54 liegt unter der Kraft einer Rückstellfeder 59, die an einer ersten Stützfläche 61 einer der Gehäusehälften des Fahrantriebes abgestützt ist, an einer zweiten Stützfläche 62 dieser Gehäusehälfte an. Zur Führung der Rückhaltefeder 59 ist die eine Stützfläche 61 und das Betätigungselement 54 mit jeweils einem Haltezapfen 63, 64 versehen. Zur Steuerung des Betätigungselementes 54 dient ein erstes schematisch dargestelltes Zylinderschloss 41. Beim Schließen dieses ersten Zylinderschlosses 41 wirkt eine nicht dargestellte Nase in Richtung des Feiles 65 auf den zweiten Arm 58 und verschiebt das Betätigungselement 54 und die über die Vorspannfeder 51 an das Betätigungselement 54 gekoppelte Sperrklinke 44 entgegen der Kraft der Rückstellfeder 59 aus einer AUS-Stellung (vgl. Figur 5) in eine EIN-Stellung in Richtung des Schaftes 6 der Handkurbel. Bei vollständig eingeschobenem Schaft 6, d. h. bei in seiner Ausnehmung versenktem Kurbelarm 7, steht die zweite Sperrnut 45 des Schaftes 6 der Sperrnase 48 der Sperrklinke 44 gegenüber, so dass diese in die Sperrnut 45 eintauchen kann. Beim Versuch, den Kurbelarm 7 aus der Ausnehmung 14 herauszuziehen, gelangt die eine Seitenfläche der Sperrnut 45 in Anlage mit einer Anschlagfläche 66 der Sperrnase 48 und signalisiert damit dem Bedienpersonal, dass eine Sperrung des Fahrantriebes vorliegt. Hierbei genügt bereits ein leichter Widerstand, um die Sperrung des Fahrantriebes zu signalisieren. Das zweite Betätigungselement 54 ist im Unterschied zu dem ersten Betätigungselement 27 des ersten Sperrmechanismus auch dann aus seiner AUS-Stellung in seine EIN-Stellung verschiebbar, wenn der Kurbelarm 7 nicht oder noch nicht vollständig in der Ausnehmung 14 versenkt ist. Bei vollständig herausgezogenem Schaft 6 wird die Sperrklinke beim Anheben des Betätigungselementes 54 ebenfalls angehoben und ragt damit in die Bewegungsbahn des Schaftes 6. Beim Hereinschieben des Schaftes gleitet die Stirnfläche 12 des Schaftes 6 über eine Gleitfläche 67 der Sperrnase 48 der Sperrklinke und drückt die Sperrklinke 44 entgegen der Kraft der Vorspannfeder 51 aus der Bewegungsbahn des Schaftes heraus. Danach gleitet die Sperrnase 48 bis zu ihrem Einrasten in die Sperrnut 45 auf einem abgeflachtem Mantelabschnitt 68 des Schaftes entlang.

Zur alternativen Betätigung der Sperrklinke 44 ist das zweite Betätigungselement mit einem als zweiarmiger Hebel 70 ausgebildeten dritten Betätigungselement gekoppelt. Zur Ankopplung weist das zweite Betätigungselement 54 am freien Ende seines ersten Armes 53 eine U-förmige Ausnehmung 71 auf, in die ein erster Arm 72 des zweiarmigen Hebels 70 eingreift. Dieser zweiarmige Hebel ist um eine nicht dargestellte ortsfeste Lagerschraube, die eine Bohrung 74 des Hebels 70 durchgreift, drehbar. Der zweite Hebelarm 75 des Hebels 70 ist mittels einer Klinke 73 des Zylinderschlosses 42 (vgl. Figur 6) in Richtung des Feiles 77 betätigbar.

Gemäß der Figur 6 dient zur Steuerung der Bewegung des Betätigungselementes 54 und damit zur Steuerung des zweiten Sperrmechanismus eine Vorrichtung, die ein mit einer Schrägfläche 81 versehenes Schubelement 80 aufweist. Dieses Schubelement 80 ist als Metall-Stanz/Biegeteil ausgebildet und weist zusätzlich zu der Schrägfläche 81, die rechtwinklig zur Richtung des Fahrweges des Schalters geneigt ist, einen abgewinkelten Stützarm 79 zur Anlage an der Innenseite 84 der Tür 42 der Schaltzelle 100 (vgl. Figur 1) und eine fensterartige Öffnung 85 zur Aufnahme einer Rückstellfeder 86 und eine das Widerlager für das eine Ende der Rückstellfeder bildende Bohrung 87 auf. Das abgewinkelte Ende 83 des Stützarmes ist derart gekrümmt, dass es punktförmig und damit reibungsarm an der Innenseite der Tür anliegt. Die fensterartige Öffnung 85 erstreckt sich in Wirkrichtung 91 der Rückstellfeder und dabei etwa in einem Winkel α von 45° schräg zur Verfahrrichtung 82 des Schalters. - Der Winkel α zwischen der Verfahrrichtung des Schalters und der Wirkrichtung der Rückstellfeder sollte bevorzugt zwischen 30 und 60 Grad betragen.

Das Widerlager des anderen Endes der Rückstellfeder 86 ist von einer Bohrung 88 im Einschubrahmen des Schalters gebildet. In dem Einschubrahmen sind weiterhin drei eine Dreipunktauflage für das Schubelement bildende Führungsschlitze parallel zur Wirkrichtung 91 der Rückstellfeder 86 ausgebildet, von denen in der Figur 6 nur einer 89 sichtbar ist und die jeweils von einem am Schubelement angenieteten Führungsstift durchgriffen sind, wobei die freien Enden der Führungsstifte mit einem Bund versehen sind dessen Durchmesser breiter als die Breite der Führungsschlitze ausgebildet ist. Jeweils ein Ende der Führungsschlitze ist derart erweitert, dass die Stifte mit ihrem Bund leicht in die Schlitze einführbar sind. Das andere Ende der Schlitze bildet jeweils einen Anschlag 90, an dem das Schubelement bei geöffneter Tür unter der Kraft der Rückstellfeder gehalten ist. In dieser Anschlagstellung des Schubelementes steht eine sich an das obere Ende der Schrägfläche anschließende Arbeitsfläche 93 einem abgerundeten freien Ende 92 des zweiten Betätigungselementes 54 gegenüber, wodurch das zweite Betätigungselement 54 in seiner EIN-Stellung und damit der zweite Sperrmechanismus in seiner Sperr- Stellung aktiviert ist. Beim Schließen der Tür gelangt die Innenseite 84 der Tür 42 in Anlage mit dem abgewinkelten Ende 83 des Stützarmes 79 des Schubelementes und verschiebt das Schubelement 80 entgegen der Kraft der Rückstellfeder 86 schräg zur Verfahrrichtung 82 des Schalters derart, dass die Schrägfläche 81 des Schubelementes seitlich an dem freien Ende des zweiten Betätigungselementes so weit abgleitet, bis das untere Ende der Schrägfläche dem freien Ende gegenübersteht (vgl. Figur 6). Hierdurch ist das zweite Betätigungselement freigegeben und nimmt unter der Kraft der Rückstellfeder 59 seine AUS-Stellung ein, wodurch der zweite Sperrmechanismus in seine Freigabe-Stellung überführt ist.

Alternativ zu dieser Ausführungsform der Vorrichtung kann die Schrägfläche auch am Einschubrahmen des Schalters ausgebildet sein, wobei dann das Schubelement auf der Schrägfläche gleitend auf das zweite Betätigungselement wirkt.

## Patentansprüche

1. Vorrichtung zur Steuerung eines Sperrmechanismus eines in einer Schaltzelle (100) fahrbar angeordneten elektrischen Schalters (102) mit einem Schubelement (80) und mit einer Schrägfläche (81),
wobei sich die Schrägfläche (81) in Einbaulage der Vorrichtung in Richtung (82) des Fahrweges des Schalters (102) erstreckt und das Schubelement (80) in Abhängigkeit von der Stellung einer Tür (42) der Schaltzelle (100) in der Schaltzelle verschiebbar gehalten ist, und
wobei das Schubelement (80) in Wirkverbindung mit der Schrägfläche (81) derart auf den Sperrmechanismus wirkt dass sich der Sperrmechanismus bei geschlossener Tür in einer Freigabe-Stellung und bei geöffneter Tür in einer Sperr-Stellung befindet,
**dadurch gekennzeichnet,**
**dass** die Schrägfläche (81) quer zur Richtung (82) des Fahrweges des Schalters (102) geneigt ist und
**dass** sich die Bewegungsbahn (91) des Schubelementes schräg zur Richtung (82) des Fahrweges erstreckt.

2. Vorrichtung nach Anspruch 1,
**dadurch gekennzeichnet,**
**dass** die Schrägfläche (81) an dem Schubelement (80) ausgebildet ist.

3. Schaltzelle (100) mit einem darin fahrbar angeordneten elektrischen Schalter (102), der einen Fahrantrieb (1) und einen Sperrmechanismus zum Sperren des Fahrantriebes aufweist,
**dadurch gekennzeichnet,**
**dass** der Sperrmechanismus mittels einer Vorrichtung nach einem der Ansprüche 1 oder 2 gesteuert ist.

## Claims

1. Device for controlling a blocking mechanism of an electric switch (102) which is arranged in such a way that it can travel in a switchgear cell (100), with a push element (80) and with an oblique surface (81),
the oblique surface (81) extending in the direction (82) of the travelling path of the switch (102) when the device is in the installed position, and the push element (80) being held displaceably in the switchgear cell in dependence on the position of a door (42) of the switchgear cell (100), and
the push element (80) co-operating with the oblique surface (81), acting on the blocking mechanism in such a way that the blocking mechanism is in a release position when the door is closed and in a blocking position when the door is open,
**characterized in that** the oblique surface (81) is inclined transversely in relation to the direction (82) of the travelling path of the switch (102) and **in that** the path of movement (91) of the push element extends obliquely in relation to the direction (82) of the travelling path.

2. Device acoording to Claim 1, **characterized in that** the oblique surface (81) is formed on the push element (80).

3. Switchgear cell (100) with an electric switch (102) which is arranged in such a way that it can travel in it and has a travelling mechanism (1) and a blocking mechanism for blocking the travelling mechanism, **characterized in that** the blocking mechanism is controlled by means of a device according to either of claims 1 and 2.

## Revendications

1. Dispositif pour commander un mécanisme de blocage ou de verrouillage d'un interrupteur ou commutateur électrique (102) monté de manière déplaçable dans une cellule de coupure (100), et comprenant un élément de poussée (80) et une rampe inclinée (81),
la rampe inclinée (81), dans la position implantée du dispositif, s'étendant dans la direction (82) du chemin de déplacement du commutateur (102), et l'élément de poussée (80) étant maintenu coulissant dans la cellule de coupure, en fonction de la position d'une porte (42) de la cellule de coupure (100), et
l'élément de poussée (80) agissant, en interaction avec la rampe inclinée (81), sur le mécanisme de blocage de façon telle, que le mécanisme de blocage se trouve dans une position de déblocage lorsque la porte est fermée, et dans une position de blocage lorsque la porte est ouverte,
**caractérisé en ce que** la rampe inclinée (81) est inclinée transversalement à la direction (82) du chemin de déplacement du commutateur (102), et **en ce que** la trajectoire de mouvement (91) de l'élément de poussée s'étend de manière oblique par rapport à la direction (82) du chemin de déplacement.

2. Dispositif selon la revendication 1,
**caractérisé en ce que** la rampe inclinée (81) est réalisée sur l'élément de poussée (80).

3. Cellule de coupure (100) dans laquelle est monté de manière déplaçable, un commutateur électrique (102) qui comprend un système d'entraînement de déplacement (1) et un mécanisme de blocage pour bloquer le système d'entraînement de déplacement,
**caractérisé en ce que** le mécanisme de blocage est commandé au moyen d'un dispositif selon l'une des revendications 1 ou 2.
